# NEUE EUROPÄISCHE PATENTSCHRIFT

(11) **EP 0 805 952 B2**
(45) Veröffentlichungstag und Bekanntmachung des Hinweises auf die Entscheidung über den Einspruch: **15.10.2003**
(45) Hinweis auf die Patenterteilung: 06.05.1999
(21) Anmeldenummer: 95934593.5
(22) Anmeldetag: 06.10.1995
(51) Int. Cl.: G01C 21/20, G08G 1/0968

(54) **EINRICHTUNG ZUR ZIELFÜHRUNG VON PERSONEN**
NAVIGATION DEVICE FOR PEOPLE
DISPOSITIF DE GUIDAGE DE PERSONNES A DESTINATION

(30) Priorität: 07.10.1994 DE 4436999; 06.06.1995 DE 19521929
(43) Veröffentlichungstag der Anmeldung: 12.11.1997
(73) Patentinhaber: SIEMENS AKTIENGESELLSCHAFT, 80333 München (DE)
(72) Erfinder: GARTHWAITE, Paul, D-85598 Baldham (DE); WAIZMANN, Gerd, D-83083 Riedering (DE)
(86) Internationale Anmeldenummer: DE9501415
(87) Internationale Veröffentlichungsnummer: WO96011381

(56) Entgegenhaltungen:
- EP-A- 0 123 562
- EP-A- 0 341 738
- EP-A- 0 538 514
- WO-A-96/07110
- DE-A- 4 139 581
- DE-A- 4 300 927
- GB-A- 2 239 758
- US-A- 5 334 974

## Beschreibung

Die Erfindung betrifft eine Einrichtung zur Zielführung von Personen umfassend eine Navigationseinheit, die eine Empfangseinrichtung für drahtlos übermittelte Informationen zur Erkennung der aktuellen geographischen Position ausweist, eine Kommunikationseinheit, die eine Eingabeeinheit zur Eingabe einer Zielposition und eine Ausgabeeinheit zur Ausgabe von Wegführungsinformationen umfaßt, und einen Rechner zur Routenplanung.

Aus der DE 34 45 568 ist eine gattungsgemäße Einrichtung zur Zielführung eines Fahrzeugs bekannt, das eine tragbare Steuervorrichtung aufweist. Die Steuervorrichtung ist als transportables Handgerät ausgeführt und verfügt über ein eigenes Display zur Ausgabe von Wegroutenhinweisen sowie über Bedleneinrichtungen insbesondere zur Eingabe einer gewünschten Zielposition. Ein im Handgerät integrierter Routenrechner, der Zugriff auf eine gespeicherte digitale Straßennetzkarte hat, berechnet ausgehend von einer vorgebenen Startposition eine Wegroute zu einer vorgegebenen Zialposition. Dadurch lassen sich bereits vor Antritt der Fahrt Routenplanungen durchführen, wobei die vom Routenrechner bestimmte Wegrouts anschließend von Hand an die persönlichen Wünsche unter Berücksichtigung der Verkehrsverhältnisse, soweit diese bekannt sind, angepaßt werden kann. Zur Zielführung wird die als Handgerät ausgeführte Steuervorrichtung im Fahrzeug über eine Schnittstelle mit den andaren Einrichtungen des Zielführungssystems, insbesondere mit einer Navigationseinrichtung zur Bestimmung der aktuellen geographischen Position, verbunden. Anhand der aktuellen geographischen Position des Fahrzeugs und der Wegroute wird das Fahrzeug durch Ausgabe entsprechender Fahrhinweise auf dem Display zum Ziel geführt.

Nachteilig ist bei der bekannten Einrichtung der gattungsgemäßen Art, daß die Zielführungseinrichtung nur in Kraftfahrzeugen voll funktionsfähig ist, in denen ergänzende Komponenten (z.B. Navigationsrechner, Anzeigeinrichtungen) vorinstalliert und mit dem Steuerteil verbindbar sind, nicht aber z.B. in öffentlichen Verkehrsmitteln, Bahnen oder zu Fuß zur Zielführung mitgeführt werden kann. Die bekannte Zielführungseinrichtung ermöglicht außerhalb das Fahrzeugs lediglich eine Routenplanung und/oder -optimierung. Ein Umsteigen auf andere Verkehrsmittel, ohne die Zielführung abzubrechen, ist mit der Zielführungseinrichtung nicht möglich.

Das Dokument WO-A-96/0711 = EP-A-0 777 863 (veröffentlicht 07.03.1996) ist ein älteres Recht im Sinne von Artikel 54(3),(4) EPÜ. Es beschreibt ein Navigations-informationssystem mit einem tragbaren oder fahrzeugfesten mobilen Teil und einer ortsiesten Zentrale. Im mobilen Teil sind ein GPS-Empfänger, Mittel für die Informationsein- und ausgabe und ein Mobiltelephon vorhanden. In der ortsfesten Zentrale stehen die Rechner und die Datenbanken sowie ein Interface Controller. Die Kommunikation zwischen der Zentrale und dem mobilen Teil findet über das Mobiltelephon-Netz statt. Der Benutzer benutzt das mobile Teil, um mittels der Telephontastatur oder über einen Operator aus der Zentrale Navigationsinformationen abzurufen.

Es ist **Aufgabe** der vorliegenden Erfindung, elne handliche und tragbare Einrichtung zur Zielführung von Personen anzugeben, mit der jederzeit ein Umsteigen auf andere Verkehrsmittel, insbesondere öffentliche Verkehrsmittel, Bahnen, gemietete Kraftfahrzeuge und dergleichen, möglich ist, ohne die Zielführung abzubrechen. Eine weitere Aufgabe der Erfindung besteht darin, eine Einrichtung zu schaffen, die in nahezu bellebig großen geographischen Gebieten einsetzbar ist, ohne de Mitführung von auf Speichermedien gespeicherten sehr umfangreichen geographischen Daten, insbesondere Orts- und Straßenverzeichnissen usw. zu erfordern.

Die **Lösung** dieser Aufgabe ist erfindungsgemäß gekennzeichnet durch die im Patentanspruch 1 angegebenen Merkmale. Durch die kennzeichnenden Merkmale der Unteransprüche 2 bis 7 ist die Einrichtung in vorteilhafter Weise weiter ausgestaltbar.

Dis Erfindung sieht vor, daß die Einrichtung zur Zielführung von Personen eine Navigationseinheit, eine Kommunikationseinheit und einen Rechner zur Routenberechnung umfaßt, wobei der Rechner einen Speicher mit mindestens einer digitalisierten Stra-ßenkarte aufweist und mit der Navigationseinheit über die Kommunikationseinheit datentechnisch verbindbar ist. Die Navigationseinheit weist eine Empfangseinrichtung für drahtlos übermittelte Informationen zur Erkennung der aktuellen geographischen Position auf, die Kommunikationseinheit eine Eingabeeinheit zur Eingabe einer Zielposition und eine Ausgabeeinheit zur Ausgabe von Wegführungsinformationen. Dabei bilden die Navigationseinheit, die Kommunikationseinheit, die Eingabeeinheit und die Ausgabeeinheit eine tragbare gerätetechnische Einheit, die mit einer eigenen Stromversorgung und einer Sende- und Empfangseinheit versehen ist Dar Rechner zur Berechnung wesentlicher Telle der Routenplanung ist auBarhalb der tragbaren Einheit ortsfest angeordnet und an einen Sender/ Empfänger angeschlossen zur drahtlosen Übermittlung von Routeninformationen zwischen dem Rechner und der tragbaren Einheit.

Hierdurch wird erreicht, daß weder ein leistungsstarker Rechner, noch für jede Stadt oder jedes Gebiet, in dem man sich gerade aufhält oder authalten wird, auf einem Speichermedium abgelegte umfangreiche geographische Daten, Orts- und Straßenverzeichnisse usw. für die gesamte jeweilige Region mitgeführt werden müssen. Der extern angeordnete ortsieste Rechner ermöglicht eine nahezu universelle Verfügbarkeit und eine deutliche Gewichtsreduzierung der Einrichtung zur Zielführung, die dadurch tragbar ausgeführt werden kann. Das Attribut "ortsfest" bedeutet in diesem Zusammenhang lediglich, daß der für die Routenberechnung verwendete Rechner nicht von der zielgeführten Person mitgeführt werden muß, sondern an einer beliebigen Stelle installiert ist. Dieser Rechner tauscht seine Routeninformationen mit einer Vielzahl von erfindungsgemäßen tragbaren Einheiten aus. Vorzugsweise ist die hierfür vorgesehene drahtlose Sende- und Empfangseinheit als Funktelsfon ausgebildet.

Von besonderem Vorteil im Hinblick auf die Bestimmung der aktuellen geographischen Position ist es, dass das Funktelsfon der drahtlosen Sends- und Emptangseinhelt mit einem zellular aufgebauten Funktelefonnetz verbindbar ist, wobei die Positionsbestimmung anhand der Signallaufzeiten von der aktuellen geographischen Position zu einzelnen Empfangsstationen des Funktelefonnetzes durch den Rechner oder z.B. durch ein Rechnersystem des Funktelefonnetzes erfolgen kann. Zweckmäßigerweise sollte das Funktelsfon dazu mit einer Einrichtung zur regelmäßigen Aussendung seiner Kennungsdafen versehen sein. Dadurch kann das ohnehin vorhandene Funktalefonnetz gleichzeitig zur Ortung verwendet werden.

Mit besonders hoher Genauigkeit läßt sich die aktuelle geographische Position dadurch bestimmen, wenn die Navigationseinheit als Funkpeilsystem ausgebildet ist.

Eine besonders leichte und kleine Navigationseinheit wird dadurch erzielt, daß die Navigationseinheit als Empfänger für ein Navigations-Satellitensystem ausgebildet ist. Dabei ist es von Vorteil, wenn die Empfangseinrichtung der Navigationseinhelt zum Empfang von Korrektursignalen eingerichtet ist, mit denen die Genauigkeit der Positionserkennung verbessert werden kann.

Weiterhin ist es vorgesehen, daß die Ausgabeeinheit ein Display aufweist und daß auf dem Display die aktuelle Position mit einer Umgebungskarte anzeigbar ist.

Die gerätetechnische Ausstattung und das Gewicht der Zielführungseinrichtung läßt sich dadurch welter verringern, daß die Ausgabe von Routenhinweisan schrittweise erfolgt und vom externen Rechner aus steuerbar ist. Dadurch kann der erforderliche Speicher in der tragbaren Einheit sebst bei umfangreichen Routeninformationen klein sein und ein preiswerter Speicher verwendet werden.

Eine besonders kompakte und robuste Zielführungseinrichtung ergibt sich, wenn die Ausgabeeinheit gleichzeitig als Eingabeeinheit ausgebildet ist, wobei die Eingabe insbesondere der Zielposition durch Markieren oder handschriftliche Eingabe auf dem Display erfolgen kann.

Als zweckmäßig hat es sich erwiesen, wenn die Ausgabeeinheit und/oder die Eingabeeinheit zur Übermittlung von Sprachinformationen eingerichtet ist.

Elektronisch einfach und gewichtsmäßig leicht läßt sich die Zielführungseinrichtung aufbauen, wenn die Kommunikationseinheit einen Mikrorechner umfaßt

Ein universell einsetzbares Zielführungseinrichtung erhält man, wenn die Kommunikationseinheit eine Schnittstelle aufweist, über die sie in die Elektronik eines Kraftfahrzeugs integrierbar ist.

Zweckmäßigerweise ist es vorgesehen, daß die Kommunikationseinheit über die Schnittstelle mit einer im Armaturenbrett eines Kraftfahrzeugs integrierten Anzeige zur Ausgabe von Informationen verbindbar ist.

Um eine Zielführung anhand einer immer aktuellen Route zu gewährleisten, ist es in Weiterbildung der Erfindung vorgesehen, daß der Rechner Bestandteil eines Verkehrsleitsystems ist.

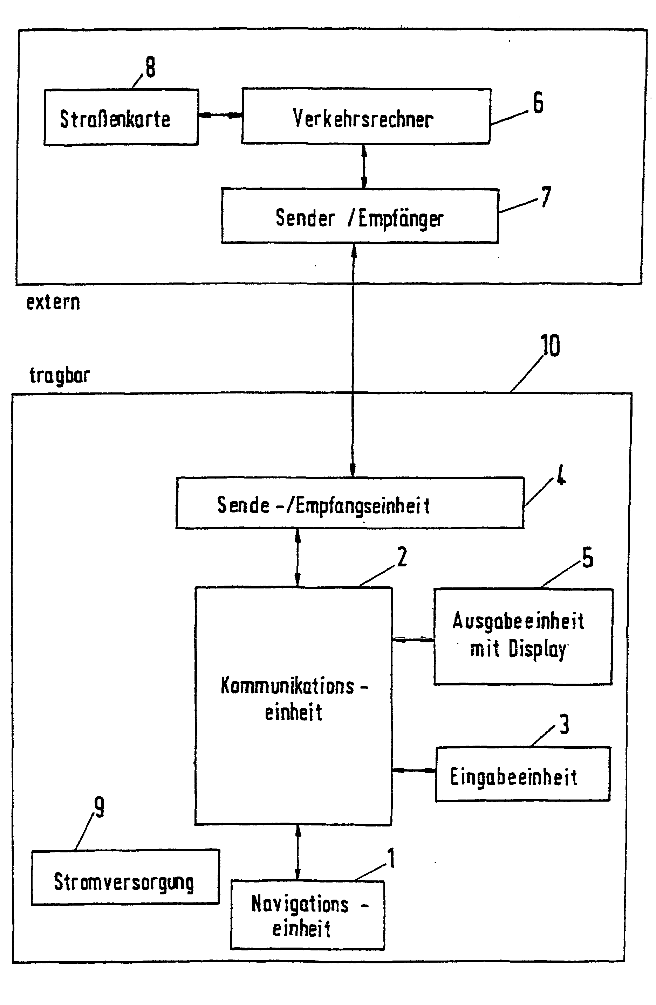

Anhand der in der einzigen Figur dargestellten Einrichtung zur Zielführung von Personen wird die Erfindung nachfolgend näher erläutert. Die Figur zeigt schematisch den Aufbau einer tragbaren Zielführungseinrichtung mit einem extern angeordneten Rechner zur Routenberechnung.

Die tragbare Zielführungseinrichtung weist eine Navigationseinheit 1 auf, die als Empfänger für ein Navigations-Satellitensystem (z.B. GPS-System) ausgebildet ist. Die Satellitensignale zur Bestimmung der aktuellen geografischen Position werden von einer Empfangseinrichtung der Navigationseinheit 1 empfangen. Zur Bestimmung der aktuellen geografischen Position werden die empfangenen Satellitensignale an die Kommunikationseinheit 2 übergeben, die mit der Navigationseinheit 1 datentechnisch verbunden ist. Zur Eingabe insbesondere der Zielposition ist die Kommunikationseinheit 2 mit einer Eingabeeinheit 3 verbunden; die Eingabe erfolgt über eine Tastatur. Die Zielführungseinrichtung ist zur Übertragung von Daten mit einer Sende-/Empfangseinheit 4 versehen, die ebenfalls mit der Kommunikationseinheit 2 verbunden ist. Zur Anzeige insbesondere von Wegführungshinweisen ist die Kommunikationseinheit 2 mit einer Ausgabeeinheit 5 versehen, die über ein Display zur optischen Anzeige von Richtungshinweisen in Form von Symbolpfeilen und ggf. sonstigen schriftlichen Informationen verfügt.

Alternativ kann die Navigationseinheit 1 auch als ein an sich bekanntes Funkpeilsystem ausgebildet sein.

Das Display der Ausgabeeinheit 5 ist so ausgebildet, daß durch den Verkehrsrechner 6 gesteuert die aktuelle Position mit einer Umgebungskarte anzeigbar ist Die Einrichtung zur Zielführung kann auf die Betriebsart "Ausgabe von Wegroutenhinweisen" durch die Bedienperson geschaltet werden. Bei dieser Betriebsart werden nur die vom Verkehrsrechner 6 übermittelten Wegroutenhinweise auf dem Display ausgegeben. Eine Weiterbildung der Erfindung sieht vor, daß die Ausgabeeinheit 5 gleichzeitig als Eingabeeinheit 3ausgebildet ist. Bei dieser Ausbildung der Zielführungseinrichtung erfolgt die Eingabe der Zielposition durch Markieren oder handschriftliche Eingabe auf dem Display. Dazu ist ein spezieller elektronischer Eingabestift vorgesehen. Altemativ dazu kann die Ausgabeeinheit 5 über einen Lautsprecher zur Sprachausgabe und die Eingabeeinheit 3 über ein Mikrofon zur Spracheingabe ausgebildet sein.

Die Ansteuerung der mit der Kommunikationseinheit 2 verbundenen Einheiten 1,3,5,4 sowie die Steuerung des Datenaustauschs zwischen den Einheiten 1,3,5,4 erfolgt zweckmäßig durch einen in die Kommunikationseinheit 2 integrierten Mikrorechner. Zum Einbau in ein Kraftfahrzeug ist die Kommunikationseinheit 2 außerdem mit einer entsprechenden Schnittstelle versehen, über die sie an die Elektronik eines Kraftfahrzeuges anschließbar ist. Über diese Schnittstelle ist die Kommunikationseinheit 2 mit den Anzeige- und Ausgabeeinrichtungen des Kraftfahrzeuges verbindbar.

Die Routenberechnung unddie Erzeugung der Richtungshinweise erfolgt in einem außerhalb dertragbaren Einrichtung zur Zielführung angeordneten Verkehrsrechner 6. Der Verkehrsrechner 6 ist über einen Sender/Empfänger 7 datentechnisch mit der tragbaren Zielfuhrungseinrichtung verbindbar. Zur Routenberechnung verfügt der Verkehrsrechner 6 über eine digitalisierte Straßenkarte B, die in einem Speicher des Verkehrsrechners 6 abgelegt ist. Die Straßen der Straßenkarte B sind durch ihre geografischen Daten gekennzeichnet, darüber hinaus sind bestimmte Attribute den einzelnen StraBenabschnitten zugeordnet, die darüber Auskunft geben, ob der entsprechende Straßenabschnitt beispielsweise aufgrund von Baumaßnahmen zur Zeit für den Verkehr gesperrt ist. Die Sende- und Empfangseinheit 4 und der Sender/Empfänger 7 sind vorteilhaft als Funktelefon ausgebildet, so daß ein gezielter Datenaustausch jederzeit durchführbar ist.

Der Verkehrsrechner 6 ist Bestandteil eines Verkehrsleitsystems, so daß die Zielführung insbesondere bei Einsatz der Einrichtung in einem Auto die aktuelle Verkehrssituation berücksichtigen kann; unter anderem können zeitweilig auftretende Staus, wegen Bauarbeiten gesperrte Straßen, Umleitungen usw. bei der Bestimmung der optimalen Fahrtroute berücksichtigt werden. Darüber hinaus ermöglicht ein mit einem Verkehrsleitsystam verbundener Verkehrsrechner 6 die Ausgabe von Hinweisen zur Benutzung alternativer Verkehrsmittel (Fahr- und Flugpläne).

Die tragbare Einrichtung zur Zielführung von Personen ist mit einer eigenen Stromversorgung 9 ausgerüstet. Damit kann dieses Gerät auch z.B. von Fußgängern zur Zielführung benutzt werden. Zusätzlich kann die Einrichtung in einem Fahrzeug an die Stromversorgung des Kraftfahrzeugs angeschlossen werden, wobei die Umschaltung auf die externe Stromversorgung automatisch vom Mikrorechner vorgenommen wird.

Bei der Zielführung einer Person wird mittels der Tastatur der Eingabeeinheit 3 das Ziel, der Straßenname, z. B. Marienplatz, eingegeben. Unmittelbar nach erfolgter Zieleingabe löst die Kommunikationseinheit 2 die Bestimmung der aktuellen geografischen Position aus. Dazu wird der Empfänger für ein Navigations-Satellitensystem 1 von der Kommunikationseinheit 2 angewiesen, die Satellitensignale zu empfangen und der Kommunikationseinheit 2 zur Verfügung zu stellen. Die Kommunikationseinheit 2 übergibt die Daten der Navigationseinheit 1 und die Zielposition an die Sende-/Empfangseinheit 4 zur Datenübertragung an den Verkehrsrechner 6. Vom Sender/Empfänger 7 werden die empfangenen Daten an den Verkehrsrechner 6 übergeben, der anhand der Straßenkarte 8 eine optimale Wegroute ermittelt Ausgehend von der aktuellen Position ermittelt der Verkehrsrechner 6 anhand der Wegroute die nächsten Wegführungshinweise, die zusammen mit der Wegroute, der Umgebungskarte sowie der markierten aktuellen Position an die Kommunikationseinheit 2 übertragen werden. In der Betriebsart "Umgebungskarübergibt die Kommunikationseinheit die Daten der Umgebungskarte einschließlich der markierten aktuellen Position an die Ausgabeeinheit 5, die die Umgebungskarte auf dem Display anzeigt In der Betriebsart "Ausgabe von Wegroutenhinweisen" werden die vom Verkehrsrechner 5 empfangenen kodierten Signale durch den Mikrorechner der Kommunikationseinheit 2 z.B. in Pfeilsymbole umgesetzt und nach Übergabe an die Ausgabeeinheit 5 in Form einer schematischen Richtungsanzeige, bei der die Richtungen als Pfeile auf dem Display angezeigt werden, ausgegeben. Zusätzlich wird die Richtungsinformation der Bedienperson in sprachlicher Form über den Lautsprecher mitgeteilt Durch Tastendruck kann die Bedienperson zwischen den beiden Betriebsarten "Ausgabe von Wegroutenhinweisen" und "Umgebungskarte" hin- und harschalten.

Bei Verwendung in einem Kraftfahrzeug wird die Einheit zur Zielführung über die ausgebildete Schnittstelle der Kommunikationseinheit 2 mit der Elektronik des Kraftfahrzeugs verbunden und in diese integriert. Dabei zeigt die Kommunikationseinheit 2 die Fahrhinweise nicht nur über das eigene Display an, sondern nutzt zurAnzeige auch das im Kraftfahrzeug installierte Display.

Die erfindungsgemäße Einrichtung läßt sich in universeller Weise zur Routenplanung, Zielführung und allgemeinen Orientierung (z.B. aktueller Standort, Zeitbedarf bis zur Zielerreichung) benutzen und erfordert nur einen geringen Kostenaufwand beim Benutzer.

## Patentansprüche

1. Einrichtung zur Zielführung von Personen umfassend eine Navigationseinheit (1), die eine Empfangseinrichtung für drahtlos übermittelte Informationen zur Erkennung der aktuellen geographischen Position aufweist, eine Kommunikationseinheit (2), die eine Eingabeeinheit (3) zur Eingabe einer Zielposition und eine Ausgabeeinheit (5) zur Ausgabe von Wegführungsinformationen umfaßt, und einen Rechner (6) zur Routenplanung, der einen Speicher mit mindestens einer digitalisierten Straßenkarte (8) aufweist und der mit der Navigationseinheit (1) über die Kommunikationseinheit (2) datentechnisch verbindbar ist, wobei der Rechner (6) zur Berechnung wesentlicher Teile der Routenplanung ortsfest angeordnet und zur drahtlosen Übermittlung von Routeninformationen an einen Sender/ Empfänger angeschlossen ist, wobei die Navigationseinheit (1), die Kommunikationseinheit (2), die Eingabeeinheit (3) und die Ausgabeeinheit (5) eine tragbare gerätetechnische Einheit (10) bilden, die mit einer eigenen Stromversorgung (9) und einer Sende- und Empfangseinheit (4) für die Datenübertragung zwischen Rechner (6) und der tragbaren Einheit (10) versehen ist und wobei die Kommunikationseinheit (2) eine Schnittstelle aufweist, über die sie an die Elektronik eines Kraftfahrzeugs anschließbar ist, wobei die Kommunikationseinheit (2) über die Schnittstelle mit einer im Armaturenbrett eines Kraftfahrzeugs integrierten Anzeige zur Ausgabe von Informationen verbindbar ist,
**dadurch gekennzeichnet,**
**dass** die Sende- und Empfangseinheit (4) als Funktelefon ausgebildet ist, dass die Navigationseinheit (1) als Funkpeilsystem ausgebildet ist oder als Navigations-Satellitensystem ausgebildet ist oder die Positionsbestimmung anhand der Signallaufzeiten von der aktuellen geografischen Position des Funktelefons zu einzelnen Empfangsstationen eines zellular aufgebauten Funktelefonnetzes, mit dem das Funktelefon verbunden ist, erfolgt und dass die Ausgabeeinheit (5) ein Display aufweist, auf dem die aktuelle Position mit einer Umgebungskarte anzeigbar ist.

2. Einrichtung nach Anspruch 1,
**dadurch gekennzeichnet,**
**dass** die Empfangseinrichtung der Navigationseinheit (1) zum Empfang von Korrektursignalen eingerichtet ist, mit denen die Genauigkeit der Positionserkennung verbessert werden kann.

3. Einrichtung nach Anspruch 1 oder 2,
**dadurch gekennzeichnet,**
**dass** die schrittweise Ausgabe von Routenhinweisen vom Rechner (6) steuerbar ist.

4. Einrichtung nach einem der Ansprüche 1 bis 3,
**dadurch gekennzeichnet,**
**dass** die Ausgabeeinheit (5) gleichzeitig als Eingabeeinheit (3) ausgebildet ist, wobei die Eingabe insbesondere der Zielposition durch Markieren oder handschriftliche Eingabe auf dem Display erfolgen kann.

5. Einrichtung nach einem der Ansprüche 1 bis 4,
**dadurch gekennzeichnet,**
**dass** die Ausgabeeinheit (5) und/oder die Eingabeeinheit (3) zur Übermittlung von Sprachinformationen eingerichtet ist.

6. Einrichtung nach einem der Ansprüche 1 bis 5,
**dadurch gekennzeichnet,**
**dass** die Kommunikationseinheit (2) einen Mikrorechner umfaßt.

7. Einrichtung nach einem der Ansprüche 1 bis 6,
**dadurch gekennzeichnet,**
**dass** der Rechner (6) Bestandteil eines Verkehrsleitsystems ist.

## Claims

1. Device for providing persons with routing information, comprising a navigation unit (1) which has a receiver device for information which is transmitted in wire-free fashion for the detection of the current geographic position, a communications unit (2) which comprises an input unit (3) for inputting a destination position, and an output unit (5) for outputting routing information, and a computer (6) for route planning, which computer (6) has a memory with at least one digitized road map (8) and which can be connected in terms of data equipment to the navigation unit (1) via the communications unit (2), the computer (6) for calculating essential parts of the route planning being fixedly arranged and being connected to a transmitter/receiver for the wire-free transmission of route information, the navigation unit (1), the communications unit (2), the input unit (3) and the output unit (5) forming a portable equipment unit (10) which is provided with its own power supply (9) and a transceiver unit (4) for transmitting data between the computer (6) and the portable unit (10), the communications unit (2) having an interface via which it can be connected to the electronics of a motor vehicle, the communications unit (2) being capable of being connected via the interface to a display integrated in the dashboard of a motor vehicle, for outputting information,
**characterized in that**,
the transceiver unit (4) is embodied as a mobile phone, **in that** the navigation unit (1) is embodied as a radio direction-finding system or as a navigation satellite system or the determination of position is carried out by reference to the signal transit times from the current geographic position of the mobile telephone to individual receiver stations of a cellular mobile phone network to which the mobile phone is connected, and **in that** the output unit (5) has a display on which the current position with a map of the surroundings can be displayed.

2. Device according to Claim 1, **characterized in that** the receiver device of the navigation unit (1) is designed to receive correction signals with which the precision of the detection of positions can be improved.

3. Device according to Claim 1 or 2, **characterized in that** the incremental outputting of route instructions can be controlled via the computer (6).

4. Device according to one of Claims 1 to 3, **characterized in that** the output unit (5) is simultaneously embodied as an input unit (3), it being possible in particular for the destination position to be input by marking or by hand-written inputting on the display.

5. Device according to one of Claims 1 to 4, **characterized in that** the output unit (5) and/or the input unit (3) are designed to transmit voice information (6).

6. Device according to one of Claims 1 to 5, **characterized in that** the communications unit (2) comprises a microcomputer.

7. Device according to one of Claims 1 to 6, **characterized in that** the computer (6) is a component of a traffic routing system.

## Revendications

1. Dispositif de guidage de personnes à destination, comprenant une unité de navigation (1), qui présente un dispositif de réception pour des informations transmises sans fil pour l'identification de la position géographique actuelle, une unité de communication (2), qui comprend une unité d'entrée (3) pour l'entrée d'une position de destination et une unité de sortie (5) pour la sortie d'informations d'itinéraires, et un ordinateur (6) pour la planification d'itinéraires, qui présente une mémoire ayant au moins une carte routière (8) numérisée et qui est connectable, quant aux données techniques, à l'unité de navigation (1) par l'intermédiaire de l'unité de communication (2), l'ordinateur (6) étant placé de manière stationnaire pour le calcul de parties essentielles de l'itinéraire et étant raccordé à un émetteur/récepteur pour la transmission sans fil d'informations d'itinéraires, l'unité de navigation (1), l'unité de communication (2), l'unité d'entrée (3) et l'unité de sortie (5) formant une unité portable (10), quant aux appareils techniques, qui est dotée d'une propre alimentation en courant (9) et d'une unité d'émission et de réception (4) pour la transmission de données entre l'ordinateur (6) et l'unité portable (10), et l'unité de communication (2) présentant une interface, au moyen de laquelle elle est connectable au système électronique d'un véhicule, l'unité de communication (2) étant raccordable au moyen de l'interface à un écran intégré dans le tableau de bord d'un véhicule pour la sortie d'informations.
**caractérisé en ce que**
l'unité d'émission et de réception (4) est exécutée comme radiotéléphone, **en ce que** l'unité de navigation (1) est exécutée comme système de radiogoniométrie ou est exécutée comme système de navigation par satellite ou que la détermination de position est réalisée à l'aide des retards de signaux de la position géographique actuelle du radiotéléphone vers les différentes stations de réception d'un réseau de radiotéléphone à structure cellulaire, avec lequel le radiotéléphone est connecté, et **en ce que** l'unité de sortie (5) présente un écran sur lequel la position actuelle est affichable avec une carte des environs.

2. Dispositif selon la revendication 1,
**caractérisé en ce que**
le dispositif de réception de l'unité de navigation (1) est équipé pour la réception de signaux de correction, avec lesquels la précision de l'identification de la position peut être améliorée

3. Dispositif selon la revendication 1 ou 2,
**caractérisé en ce que**
la sortie par étapes d'informations d'itinéraires est commandable par l'ordinateur (6)

4. Dispositif selon l'une quelconque des revendications 1 à 3,
**caractérisé en ce que**
l'unité de sortie (5) est simultanément exécutée comme unité d'entrée (3), l'entrée, notamment de la position de destination, pouvant être réalisée par marquage ou entrée manuscrite sur l'écran.

5. Dispositif selon l'une quelconque des revendications 1 à 4,
**caractérisé en ce que**
l'unité de sortie (5) et/ou l'unité d'entrée (3) est conçue pour la transmission d'informations vocales.

6. Dispositif selon l'une quelconque des revendications 1 à 5,
**caractérisé en que** l'unité de communication (2) comprend un microordinateur.

7. Dispositif selon l'une quelconque des revendications 1 à 6,
**caractérisé en ce que**
l'ordinateur (6) fait partie intégrante d'un système de guidage de circulation.
